# EUROPEAN PATENT APPLICATION

(11) **EP 2 015 215 A2**
(43) Date of publication of application: **14.01.2009**
(21) Application number: 08152719.4
(22) Date of filing: 13.03.2008
(51) Int. Cl.: G06F 21/00

(54) **Apparatus and method for importing content including plural pieces of usage constraint information**

(30) Priority: 02.07.2007 KR 20070066191
(71) Applicant: Samsung Electronics Co., Ltd., Suwon-si, Gyeonggi-do 442-742 (KR)
(72) Inventor: Moon, Ji-young, Gyeonggi-do (KR); Ju, Hak-soo, Gyeonggi-do (KR); Kim, Myung-Sun, Gyeonggi-do (KR)
(74) Representative: Robinson, Ian Michael

(57) **Abstract**

Provided are a method and apparatus for generating separate rule data using a database management system (DBMS) based language in order to efficiently manage usage rules of content. The method of providing usage rule data of content included in a mobile storage medium connected to a content reproduction device, the method includes: generating first rule data that is a set of rules used to manage the usage rule data based on a data structure of a database management system (DBMS); and generating second rule data that is a set of rules used to access the usage rule data using the first rule data.

## Description

### BACKGROUND OF THE INVENTION

### 1. Field of the Invention

The present invention relates to a method of providing usage rule data, and more particularly, to a method and apparatus for generating first rule data used to manage usage rules such as reproduction, duplication, movement of content based on a database management system (DBMS) and second rule data used to access the usage rules, and a computer readable recording medium storing data structures used in the method.

### 2. Description of the Related Art

The popularity of the Internet and development of telecommunications have recently led to production, processing, and distribution of various types of digital content. However, unlike analog data, illegal duplication of digital content has been on the rise due to lossless duplication of digital content, ease of reuse, processing, and distribution thereof, or the like.

In particular, as a distribution environment of digital content broadens owing to combinations between networks, devices, and content and services, content is currently spreading via devices or mobile devices over digital broadcasting and home networking while content is distributed through Internet-accessed PCs. Therefore, in order to protect content and content producers from illegal duplication of content, various research into a digital rights management (DRM) has been conducted, many DRM-based services have been introduced, and a limited distribution of content has been made according to content usage rules.

In more detail, an encryption technology is used to protect content, and content is legally distributed according to content usage rules although content is distributed to other users via duplication or movement of content.

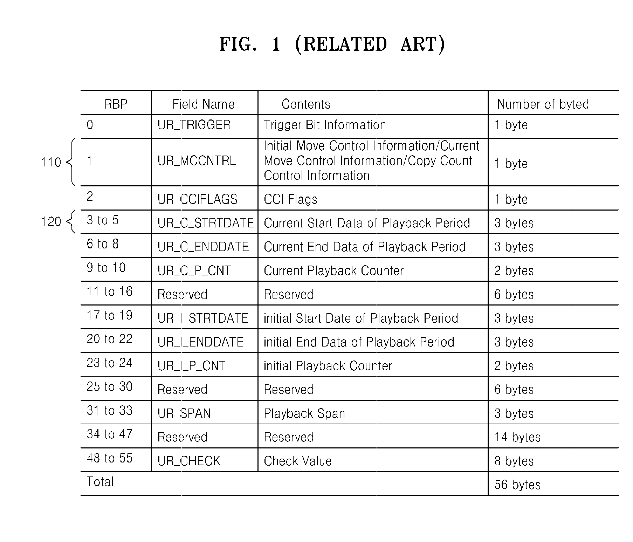

FIG. 1 is a table illustrating conventional usage rule data of content constructed by using bit allocation. Referring to FIG. 1, a content protection for recordable media (CPRM), i.e., a content duplication protection technology, is a mechanism for binding data recording and media on which the data is recorded. When a 64-bit intrinsic disk ID included in a burst cutting area (BCA) of a recordable DVD is used to record legally protected data on the disk, the data is protected using a 56-bit encryption extracted from the 64-bit disk ID. When the data is reproduced from the disk, the 64-bit disk ID is read from the BCA and is used to generate a key for decrypting content of the disk. In order to duplicate the content of the disk to other media, if an ID of the content of the disk is not identical or the content of the disk has no ID, it is impossible to decrypt the content of the disk.

Relative byte position (RBP) 1 110 describes a usage rule of move control UR_MCCNTRL. Move control data have values 00, 01, 11, and the like each indicating disallowed move, one allowed move, unlimited move, and the like. RBP 3-5 120 describes a start date of a reproduction period.

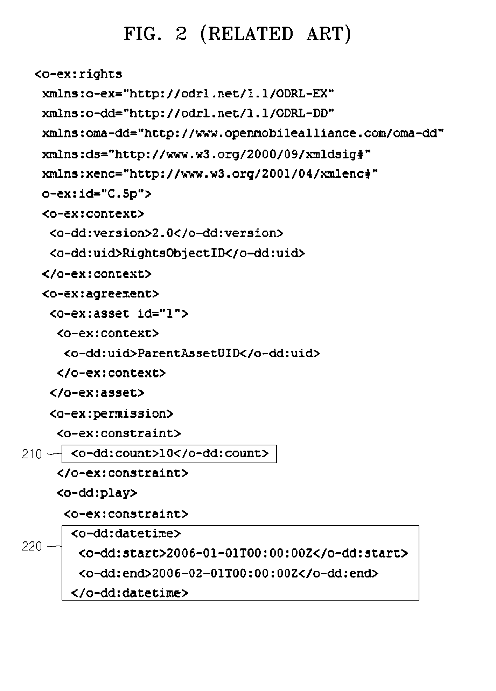

FIG. 2 is code illustrating conventional usage rule data of content expressed in a mark-up language. Referring to FIG. 2, the usage rule data of content is in the form of an extensible markup language (XML). The usage rule data includes usage count rule 210, start and end time of usage duration 220 and the like.

However, the conventional usage rule data of content is expressed via the bit allocation or in the form of the XML, and directly accesses a reproduction device or the usage rule in the form of the XML. Therefore, security of usage rules and an efficient action thereof are limited.

### SUMMARY OF THE INVENTION

According to the present invention there is provided an apparatus and method as set forth in the appended claims. Other features of the invention will be apparent from the dependent claims, and the description which follows.

The embodiments of the present invention provide a method and apparatus for generating separate rule data using a database management system (DBMS) based language in order to efficiently manage usage rules of content, and a computer readable recording medium storing data structures used in the method.

According to an aspect of the present invention, there is provided a method of providing usage rule data of content included in a mobile storage medium connected to a content reproduction device, the method comprising: generating first rule data that is a set of rules used to manage the usage rule data based on a data structure of a database management system (DBMS); and generating second rule data that is a set of rules used to access the usage rule data using the first rule data.

The first rule data may present a data record of the usage rule data in a table format defined by the data structure of the DBMS, and includes commands used to carry out at least one of actions of creating, selecting, and updating the data record.

The first rule data may be expressed using a structured query language (SQL).

The command used to carry out the action of creating the data record may generate a table including a data body comprising at least one of data items of the usage rule data.

The command used to carry out the action of selecting the data record may select the data item from the table and store the data item in a predetermined variable in a memory.

The command used to carry out the action of updating the data record may assign a value stored in the predetermined variable to a predetermined data item of the table.

The data item may include at least one of an ID, a first date, an end date, a usage duration, a copy permission number, and extra information of the usage rule data.

The second rule data may include a constant data block used to determine a constant value for accessing the usage rule data and an execution data block used to establish an execution action for accessing the usage rule data.

The execution data block may include at least one of a name of the execution action, an argument, a constant, and an execution code.

According to another aspect of the present invention, there is provided a computer readable medium having recorded thereon first rule data that is a set of rules used to manage usage rule data of content included in a mobile storage medium, based on a data structure of a DBMS, and second rule data that is a set of rules used to access the usage rule data using the first rule data.

According to another aspect of the present invention, there is provided an apparatus for providing usage rule data of content included in a mobile storage medium connected to a content reproduction device, the apparatus comprising: a first generation unit which generates first rule data that is a set of rules used to present a data record of the usage rule data in a table format defined by a data structure of a DBMS, and carries out at least one of actions of creating, selecting, and updating the data record; and a second generation unit which generates second rule data that is a set of rules used to determine a constant value for accessing the usage rule data and establish an execution action for accessing the usage rule data.

According to another aspect of the present invention, there is provided a computer readable medium having recorded thereon a computer program for executing a method of generating first rule data that is a set of rules used to manage usage rule data based on a data structure of a DBMS; and generating second rule data that is a set of rules used to access the usage rule data using the first rule data.

### BRIEF DESCRIPTION OF THE DRAWINGS

The above and other aspects and advantages of the present invention will become more apparent by describing in detail exemplary embodiments thereof with reference to the attached drawings in which:
FIG. 1 is a table illustrating related art usage rule data of content constructed by using bit allocation;
FIG. 2 is code illustrating related art usage rule data of content expressed in a mark-up language;
FIG. 3 is a flowchart illustrating a method of generating first rule data used to manage usage rule data of content and second rule data used to access the first rule data according to an exemplary embodiment of the present invention;
FIGS. 4A and 4B illustrate a command used to carry out an action of generating a record of first rule data according to an exemplary embodiment of the present invention;
FIGS. 5A and 5B illustrate a command used to carry out an action of selecting the record of the first rule data according to an exemplary embodiment of the present invention;
FIGS. 6A and 6B illustrate a command used to carry out an action of updating the record of the first rule data according to an exemplary embodiment of the present invention; and
FIGS. 7A through 7C illustrate a constant data block and an execution data block of second rule data according to an exemplary embodiment of the present invention.

### DETAILED DESCRIPTION OF EXEMPLARY EMBODIMENTS OF THE INVENTION

The attached drawings for illustrating preferred embodiments of the present invention and the description thereof are referred in order to gain a sufficient understanding of the present invention, the merits thereof, and the objectives accomplished by the implementation of the present invention.

Hereinafter, exemplary embodiments of the present invention will be described in detail with reference to the accompanying drawings.

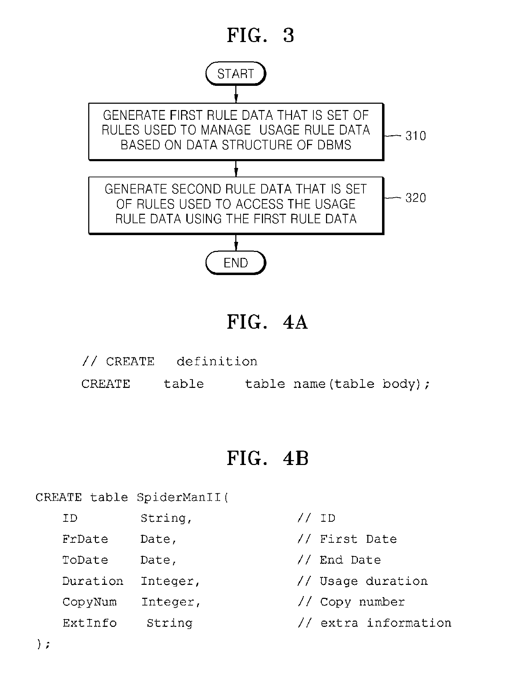

FIG. 3 is a flowchart illustrating a method of generating first rule data used to manage usage rule data of content and second rule data used to access the first rule data according to an embodiment of the present invention. Referring to FIG. 3, the method of the present embodiment comprises generating the first rule data that is a set of rules used to manage the usage rule data, based on a data structure of a database management system (DBMS) (Operation 310) and second rule data that is a set of rules used to access the usage rule data using the first rule data (Operation 320).

The first rule data presents a data record of the usage rule data in a table format defined by the data structure of the DBMS, and includes commands used to carry out at least one of actions of creating, selecting, and updating the data record.

The first rule data can be expressed using a structured query language (SQL) that is a standard computer language for accessing databases.

In the present embodiment, a system, which secures the application of various types of content that is delivered and distributed through a mobile storage medium to many compatible devices, i.e., content reproduction devices, provides the usage rule data that is divided into two types of rules used to manage and access the usage rule data, respectively.

In detail, it is determined whether an item requested according to the first and second rules is within the scope of usage rights when a user inquires about or modifies details of the usage rule data in order to request reproduction or duplication of content. In more detail, the first rule data is used to determine whether to create, select, or update the usage rule data, and the second rule data is used to determine whether to allow reproduction or duplication of content.

Hereinafter, commands for creating, selecting, and updating the usage rule data, which are included in the first rule data, will now be described.

There are three types of data as shown below.
(i) integer: 4-byte integer value; 8 bit encoding comes in 4-byte big-endian order;
(ii) string: UTF-8 string [RFC 3629] ended with a NULL value; and
(iii) date: expressed in year/month/day (YYYY/MM/DD)

In order to manage detailed information of the usage rule data of content in the present embodiment, the DBMS, in particular, a relational DBMS, is used and the SQL refers to the standard [ISO 9075-2].

The first rule data uses keywords as shown below.

**[Table 1]**

| | | | |
|---|---|---|---|
| CREATE | Integer | SET | UPDATE |
| Date | INTO | String | WHERE |
| FROM | SELECT | TABLE | |

In the drawings, "//" denotes comments.

FIGS. 4A and 4B illustrate a command used to carry out an action of generating a record of the first rule data according to an embodiment of the present invention. Referring to FIG. 4A, the definition of a command for creating the usage rule data, i.e., the command used to carry out the action of generating the record of the first rule, is provided.

In more detail, (i) table_name indicates a name of a usage rule table since the usage rule data is expressed in the table format defined by the data structure of the DBMS as mentioned above; and
(ii) table_body indicates a sequence of a series of table items table_item. Table items may include an ID, a first date, an end date, a usage duration, copy permission number, and extra information of the usage rule data.

Referring to FIG. 4B illustrating an example of the command shown in FIG. 4A, a name of a table to be generated is "SpiderManII", and items thereof are an identifier ID, a first date FrDate, an end date ToDate, a usage duration Duration, a copy permission number CopyNum, and extra information ExtInfo in a respective data type (integer, string, and date).

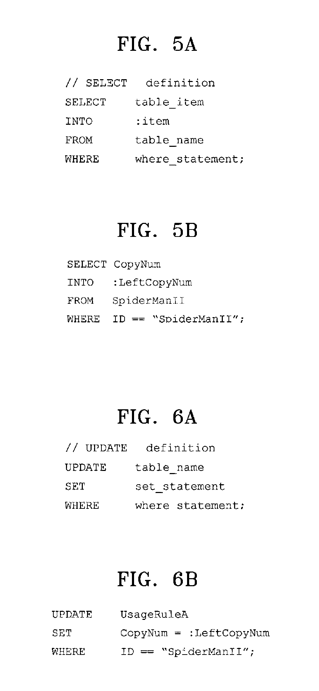

FIGS. 5A and 5B illustrate a command used to carry out an action of selecting the record of the first rule data according to an embodiment of the present invention. Referring to FIG. 5A, the definition of a command for selecting the usage rule data, i.e., the command used to carry out the action of selecting the record of the first rule, is provided.

In more detail, (i) table_item indicates an ID of the usage rule data, a first date, an end date, a usage duration, a copy permission number, and extra information;
(ii) a host variable follows INTO. The host variable is a name of a variable used to store an item of a selected table of the usage rule data in memory;
(iii) an object that brings the table_item, i.e., a table name of the usage rule data, follows FROM; and
(iv) a selection reference, i.e., a data limiting rule where_statement, follows WHERE, which is used to select data only including a specific rule or rules.

Referring to FIG. 5B illustrating an example of the command shown in FIG. 5A, the command indicates that (a) in a table of the usage rule data under the name of "SpiderManII", (b) if the ID is identical to "SpiderManII", (c) a table item "CopyNum" is selected, and (d) the table item is stored in a variable "LeftCopyNum".

FIGS. 6A and 6B illustrate a command used to carry out an action of updating the record of the first rule data according to an embodiment of the present invention. Referring to FIG. 6A, definition of a command for updating the usage rule data, i.e., the command used to carry out the action of updating the record of the first rule, is provided.

In more detail, (i) table_name indicates a name of a usage rule table;
(ii) data to be updated or renewed and a new value thereof follow SET; and
(iii) a selection reference, i.e., a data limiting rules where_statement, follows WHERE in order to select data only including a specific rule or rules.

Referring to FIG. 6B illustrating an example of the command shown in FIG. 6A, the command indicates that (a) in a table of the usage rule data under the name of "UsageRule A", (b) if the ID is identical to "SpiderManII", (c) a variable "LeftCopyNum" is assigned to a table item "CopyNum".

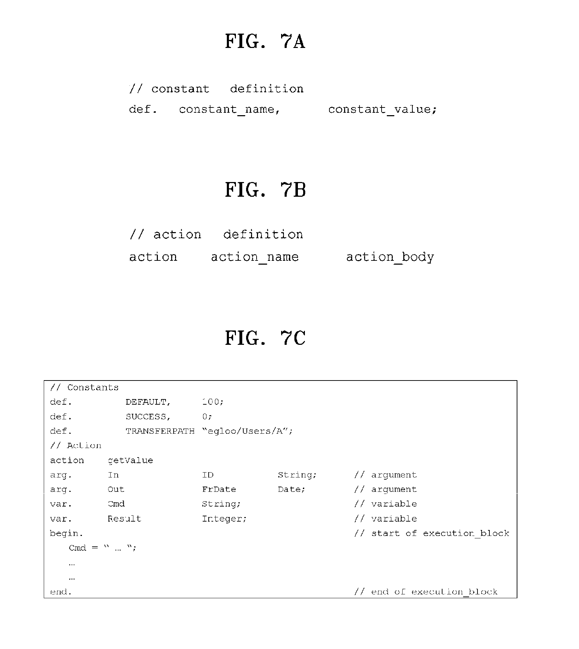

FIGS. 7A through 7C illustrate a constant data block and an execution data block of the second rule data according to an embodiment of the present invention. The second rule data refers to the standard C++ language specification [ISO 14882].

The second rule data uses keywords as shown below,

**[Table 2]**

| | | | | |
|---|---|---|---|---|
| Action | def | end-else | if | ne |
| And | elif | end-if | In | or |
| Arg | else | eq | Integer | Out |
| begin | end | ge | le | String |
| Date | end-elif | gt | lt | var |

wherein, gt, lt, ge, le, eq, and ne denote greater than, less than, greater than or equal, less than or equal, equal, and not equal, respectively.

Referring to FIG. 7A, the definition of the constant data block, i.e., types used to determine a constant, is provided: (i) constant_name indicates a name of a constant in a capital letter ID; and (ii) constant_value indicates a real value of the constant.

Referring to FIG. 7B, the definition of the execution data block is provided: (i) action_name indicates a representative name of an action to be executed; and (ii) action_body describes a process for executing a requested action, and includes an argument, a constant, and an execution code block execution_block.

Referring to FIG. 7C illustrating an example of the constant data block of FIG. 7A and the execution data block of FIG. 7B, the constant data block is used to determine a constant value for accessing the usage rule data and the execution data block is used to establish an execution action for accessing the usage rule data.

The argument has In or Out properties, which indicate argument properties that are delivered when a function is called. The variable used for the execution code block execution_block is previously declared. The execution code block execution_block includes an action process necessary for executing the requested action.

The method of providing the usage rule data of content according to the present invention can be embodied as a computer readable program, and realized in a general-purpose computer capable of executing the program via a computer readable recoding medium.

Also, the data structures used in the above embodiments can be recorded on a computer readable medium via various devices.

Examples of the computer readable recording medium include a magnetic storage medium, e.g., read-only memory (ROM), a floppy disk, and a hard disc; and an optical recording medium, e.g., a CD-ROM and a digital versatile disc (DVD) Other types of computer readable media include carrier waves (such as data transmission through the Internet).

According to an aspect of the present invention, the method of providing the usage rule data of content increases security of usage rule data by separating the usage rule data into first rule data used to manage usage rules such as reproduction, duplication, movement of content and second rule data used to access the usage rules. The method also can more efficiently manage detailed information of the usage rule data based on a DBMS.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of providing usage rule data of content included in a mobile storage medium connected to a content reproduction device, the method comprising:
generating first rule data that is a set of rules used to manage the usage rule data based on a data structure of a database management system; and
generating second rule data that is a set of rules used to access the usage rule data using the first rule data.

2. The method of claim 1, wherein the first rule data presents a data record of the usage rule data in a table format defined by the data structure of the database management system, and includes commands used to carry out at least one of actions of creating, selecting, and updating the data record.

3. The method of claim 2, wherein the first rule data is expressed using a structured query language.

4. The method of claim 3, wherein the command used to carry out the action of creating the data record generates a table including a data body comprising at least one of data items of the usage rule data.

5. The method of claim 4, wherein the command used to carry out the action of selecting the data record selects the data item from the table and stores the data item in a predetermined variable in a memory.

6. The method of claim 5, wherein the command used to carry out the action of updating the data record assigns a value stored in the predetermined variable to a predetermined data item of the table.

7. The method of claim 4, 5 or 6, wherein the data item includes at least one of an ID, a first date, an end date, a usage duration, a copy permission number, and extra information of the usage rule data.

8. The method of claim 7, wherein the second rule data includes a constant data block used to determine a constant value for accessing the usage rule data and an execution data block used to establish an execution action for accessing the usage rule data.

9. The method of claim 8, wherein the execution data block includes at least one of a name of the execution action, an argument, a constant, and an execution code.

10. A computer readable medium having recorded thereon a computer program for executing the method of any of claims 1 to 9.

11. A computer readable medium having recorded thereon first rule data that is a set of rules used to manage usage rule data of content included in a mobile storage medium, based on a data structure of a database management system, and second rule data that is a set of rules used to access the usage rule data using the first rule data.

12. The medium of claim 11, wherein the first rule data presents a data record of the usage rule data in a table format defined by the data structure of the database management system, and includes commands used to carry out at least one of actions of creating, selecting, and updating the data record.

13. The medium of claim 12, wherein the first rule data is expressed using a structural query language.

14. The medium of claim 13, wherein the command used to carry out the action of creating the data record generates a table including a data body comprising at least one of data items of the usage rule data.

15. The medium of claim 14, wherein the command used to carry out the action of selecting the data record selects the data item from the table and stores the data item in a predetermined variable in a memory.

16. The medium of claim 15, wherein the command used to carry out the action of updating the data record assigns a value stored in the predetermined variable to a predetermined data item of the table.

17. The medium of claim 14, 15 or 16, wherein the data item includes at least one of an ID, a first date, an end date, a usage duration, copy permission number, and extra information of the usage rule data.

18. The medium of claim 17, wherein the second rule data includes a constant data block used to determine a constant value for accessing the usage rule data and an execution data block used to establish an execution action for accessing the usage rule data.

19. The medium of claim 18, wherein the execution data block includes at least one of a name of the execution action, an argument, a constant, and an execution code.

20. An apparatus for providing usage rule data of content included in a mobile storage medium connected to a content reproduction device, the apparatus comprising:
a first generation unit which generates first rule data that is a set of rules used to present data record of the usage rule data in a table format defined by a data structure of a DBMS, and carries out at least one of actions of creating, selecting, and updating the data record; and
a second generation unit which generates second rule data that is a set of rules used to determine a constant value for accessing the usage rule data and establish an execution action for accessing the usage rule data.
